# EUROPEAN PATENT APPLICATION

(11) **EP 4 437 832 A1**
(43) Date of publication of application: **02.10.2024**
(21) Application number: 24160741.5
(22) Date of filing: 01.03.2024
(51) Int. Cl.: A01F 15/04, A01F 15/07, A01F 15/08

(54) **SYSTEM AND METHOD FOR ADJUSTING BALER SETTINGS ON-THE-FLY**

(30) Priority: 22.03.2023 US 202318187883
(71) Applicant: Deere & Company, Moline, IL 61265 (US)
(72) Inventor: Jadhao, Umesh B., Mannheim (DE); Vadnere, Mohan A., Mannheim (DE)
(74) Representative: Stein, Stefan

(57) **Abstract**

One or more techniques and/or systems are disclosed for automatically adjusting settings on a baler based at least on the characteristics of a previously formed or forming bale. A baler collects a target crop and forms a bale. During or after formation of the bale, sensors collect data that is indicative of bale characteristics, including mass flow, shape, size, density, wrap and twine control, amongst other for the bale. A baler controller can use the identified bale characteristics to determine baler settings adjustments, for the baler, that can bring the bale, or subsequent bale, into specification based on predetermined thresholds for the bale characteristics. Further, actuators can operably adjust the baler settings on the fly.

## Description

### BACKGROUND

In an agricultural setting, crop materials are often cut, conditioned, arranged into windrows, and/or otherwise processed. In some cases, the crop materials may be raked, chopped, and/or baled. Certain work vehicles are provided for these activities. Some harvesting work vehicles and attachable equipment, such as conditioning work vehicles and baling vehicles/implements, may include implements for cutting, conditioning, and/or arranging the crop material into windrows and/or bales. Typically, the configuration of these implements may be changed or adjusted based on the target project/crop/situation, and desired result. For example, the position of the implements on the work vehicle may be selectively changed, and these implements can also be manually adjustable for desired results in most cases. In some cases, the baling equipment may need to be adjusted to accommodate crop conditions, desired bales characteristics, and equipment conditions. For example, the operator adjusts bale parameters and forms the bale. Once the bale is ejected, the operator manually inspects the bale to determine if the bale has the correct characteristics, then manually adjusts the settings based on their observations.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

One or more techniques and systems are described herein for automatically adjusting settings on a baler based at least on the characteristics of a previously formed bale. A baler collects a target crop and forms a bale, which is ejected from the baler. During operation, sensors can collect data indicative of bale characteristics, including shape, size, density, wrap and twine control, amongst other. The bale characteristics can be used to identify baler settings adjustments that can bring the bale into specification based on predetermined thresholds for the bale characteristics. Further, actuators can operably adjust the baler settings on the fly.

In one implementation of a system for automatically adjusting settings on a baler based at least on the characteristics of a previously formed bale, a baler collects a target crop and forms a bale from the collected crop. In this implementation, a sensor array, comprising one or more sensors, identifies bale characteristics of the formed bale, and the sensor array generates sensor data indicative of the identified bale characteristics. Further, a baler controller generates baler adjustment data indicative of one or more baler system adjustments, where the baler adjustment data is generated based at least on the sensor data and a pre-determined threshold for one or more of the bale characteristics. Additionally, one or more actuators can be used to adjust baler settings in the baler based at least on the baler adjustment data.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

FIGURE 1 is a component diagram illustrating one implementation of an example vehicle that may implement one or more systems and methods described herein.
FIGURE 2 is a component diagram illustrating an alternate implementation of an example vehicle that may implement one or more systems and methods described herein.
FIGURE 3 is a schematic diagram illustrating one implementation of one or more portions of one or more systems as described herein.
FIGURE 4 is a schematic diagram illustrating one implementation of one or more portions of one or more systems as described herein.
FIGURE 5 is a flow diagram illustrating one example implementation of a method for adjusting baler settings during operation, as described herein.
FIGURE 6 is a schematic diagram of an example computer system that can be used to provide computational functionalities associated with methods and systems described herein.

### DETAILED DESCRIPTION

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

In an agricultural setting, a baler can be used to collect and aggregate a target crop into a formed bale. Typically, prior to a baling operation, the baling operation characteristic setting on a baler are prepared before the operator starts baling. For example, prior to a baling operation, the operator may set certain parameters for the type of baler and target bale, for an easier baling experience. Such setting may include pickup height setting, bale size / flake width settings, bale shape setting, bale density setting, and a net wrapping / twine setting. During baling, the operator may wish to adjust certain settings, based on observation of the resulting bales, and/or changing conditions of the baling operation.

As an example, the baler pickup mechanism (to pick up the target crop) can be adjusted for adequate ground clearance. For example, if this is set too low, the pickup teeth may contact the ground, rocks and debris, that could be thrown towards the operator or drawn into the baler. However, if set too high the mechanism may leave crop on the ground. Therefore, the pickup height setting can be important, and may be adjusted according to site conditions, ground clearance, ground type, crop type, and operation ground speed. For example, mass flow of the collected crop can be an indicator of an appropriate height setting. That is, the operator may wish to increase the mass flow (e.g., more crop collected), while mitigating ground contact.

Further, regarding the bale size / flake width settings, a square bale can be comprised of several flakes (e.g., compressed, formed portion of the crop that make up a bale) that are compressed together to form the bale of a desired length. A number of flakes per bale can depend on the crop type, characteristics, desired bale size, compression applied, and density. As such, a flake width setting can determine the width of each flake in the bale, which may be controlled by an amount of crop per flake, and an amount of compression applied during formation of the flake. Additionally, the bale size can be determined by the size and number of each flake, but can be set to a desired length. With regard to round bales produced by a round baler, the bale size can be preset to a desired diameter by the operator. In some situations, the bales size may be varied depending on the desired bale consistency and weight. That is, for example, it may be desired to have a soft or less dense inner core (e.g., to mitigate auto-combustion, for using a bale fork) with a denser or more tightly packed outer core (e.g., for weather resistance). In this example, a predetermined weight for each bale may also mean that the bale size differs between bales that have different densities and/or different crop characteristics. Therefore, the bale size may be adjusted to meet the needs of the operator.

Regarding the bale shape settings, can be related to a round bale formed by a round baler. For round bales produced by a round baler, a certain shape of the round bale is desired for the end use, and for more effective bale storage. That is, a round bale with square shoulders may provide for easier storage (e.g., stacking on end), which typically results from an even distribution of the windrow being collected. That is, for example, the if as long as the vehicle maintains a straight transit over the windrow, and the windrow is relatively evenly distributed, the crop is collected and baled in even layers that are rolled up. This can produce a desired bales shape. If the windrowed crop is not evenly distributed on the ground, and/or the vehicle does not maintain a straight transit over the windrow, crop may accumulate in the bale unevenly, resulting in a poorly shaped bales, with uneven distribution and density. Bale shape can be adjusted based on the desired shape. The shape may be corrected during collection by adjusting the tractor's movement, and/or adjusting the collector and collator portions of the baler.

Regarding the bale density setting, the density of a bale can be affected by several factors, such as the characteristics of the crop (e.g., type, moisture content, density of crop, etc.), size of bale, weight of bale, compaction of the bale. For example, bale density setting can be adjusted to generate more or less compression/compaction on the collected crop during bale formation. As an example, for square balers, as the crop is collected into a bale former, the crop is compacted in sections (e.g., flakes) using a compaction tool (e.g., press, ram, etc.). In this example the amount of compression applied to each flake can be adjusted to accommodate a desired bale density. In round bales, for example, the crop is collected and directed over roller or belts to then form the round bale in a wrapping/winding motion. The rollers or belts apply a set amount of pressure on the crop as it is wound into the bale. The amount of pressure applied can be adjusted to adjust the density of the bale to a desired result. As an example, a drier crop (e.g., less moisture content) may be compressed to a denser bale to achieve a desired weight. Also, a crop with a higher moisture content can be less compressed to aid in drying, and to mitigate auto-combustion. Additionally, the compression setting may be adjusted during bale formation, such as to create a less dense core with more tightly packed outer layers. Also, for some round balers, a number of windings or wraps can be controlled (e.g., six to eleven), to provide for a desired density.

When bales are formed by the baler, they can be wrapped or tied up before being ejected in order to maintain their shape and retain their contents. As an example, an appropriate amount of tension is desired for the ties or wraps in order to maintain a desired shape, and to mitigate breakage or tearing of the ties/wraps. Further, in some implementations, the operator can select an amount of wrap to be used (e.g., number of wraps), such as for shape and/or protection from the elements, or moisture control. Twine tension can be one of the settings adjusted to provide for aa desired result. For example, too much tension can lead to breakage or improper knot tying, while too little tension can result in improper knots and loose bales. Therefore, the tension adjustment can be made based on site conditions, types of crop, condition of the crop, type of twine, condition of the baler, etc. For round balers, a net type wrap, or flexible sheet polymer can be applied. Depending on the desired shape and size of the resulting bale, the number of wraps and tension applied to the wrapping can be adjusted based on the condition of the crop, type of wrap, condition of the baler, etc.

In one aspect, as described herein, one or more systems and methods can be devised to provide for automatic adjustment of baler settings, on the fly, based on sensor data collected for respective, formed bales (e.g., the previously formed bale). That is, for example, an image sensor (e.g., camera, lidar, radar, ultrasonic detector, etc.) can image respective bales as they are formed and ejected to identify characteristics that may be used to perform adjustments to the baler settings. Further, other sensors, such as a mass flow sensor, moisture sensor, and more, can be used to detect conditions of the target crop as it is collected and baled. In this way, sensor data can be used to make real-time adjustments to the baler and tractor settings to ensure that subsequent bales meet desired parameters, such as shape, size, density, etc.

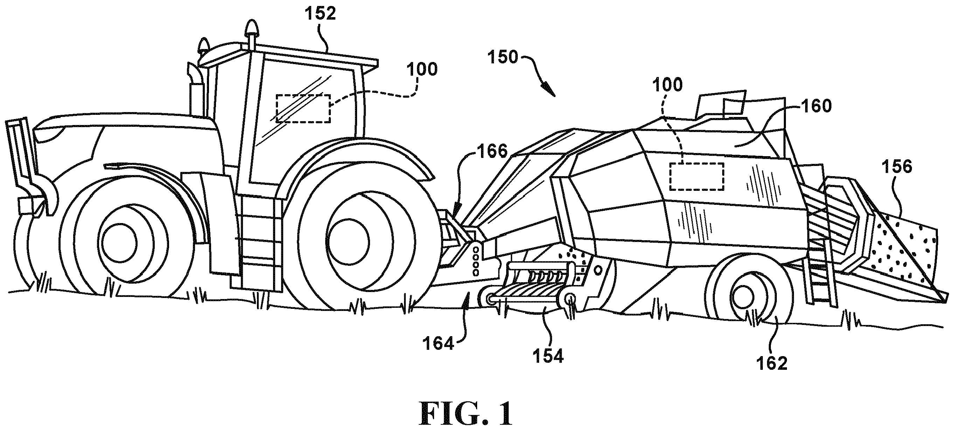

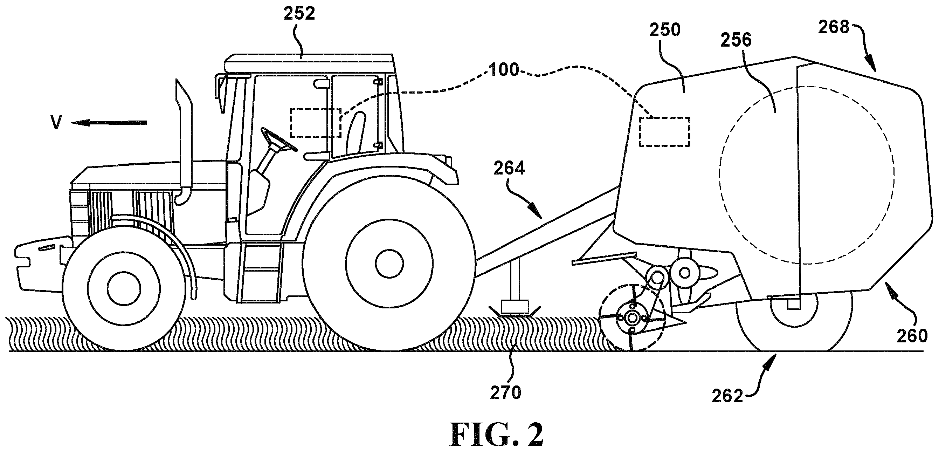

FIGURE 1 is a component diagram illustrating one example implementation of a system 100 for automatically adjustment of baler settings in real-time during baling operations. In this example, an agricultural vehicle 152 and agricultural harvesting machine 150, such as a baler (e.g., square baler), may comprise an implementation of the system 100, as described herein. In this example, a large square baler is shown, but the systems and techniques described herein may also be applied to other balers and harvesting machines, as described below in FIGURE 2. As illustrated, the agricultural harvesting machine 150 may be coupled to, and towed by, the agricultural vehicle 152, such as a tractor. Alternately, the agricultural harvesting machine 150 may be self-propelled. In some implementations, the agricultural harvesting machine 150 may be combined or integrated with a cotton harvester, a combine harvester, or other harvesting machines.

In this implementation, as depicted in FIGURE 1, the baler 150 may comprise a frame 160, ground engaging devices 162, such as wheels or tracks, a hitch or tow-bar 164 for attachment to the tractor 152, or other vehicle, and a power input shaft 166, such as a power-take-off (PTO) shaft, which can receive rotational power from a tractor 152. Further, the baler 150 can comprise a crop pick-up mechanism 154 (e.g., input or gatherer), and the tractor 152 can tow the baler 150 across a field and gather and process crop material to form a crop package 156, such as a bale. In some implementations, the baler 150 can utilize a twine tying mechanism that wraps and ties twine around the bale 156 prior to ejection. In other implementations, the baler 150 can comprise a bale wrapping mechanism that wraps the bale 156 in sheet wrap prior to ejection. In this example, power provided by the input shaft 166 can function to operate the mechanisms of the baler 150, such as the independent needle drive 100, pick-up mechanism 154, and other processing mechanisms. The baler 150 may then eject the formed bale 156 from the rear of the baler 150.

As another example, as illustrated in FIGURE 2, a component view of an alternate agricultural harvesting machine 250 and agricultural vehicle 252, in which the example system 100 may be implemented. In this example, the agricultural harvesting machine 250 is a round baler. The baler 250 may be used as an arrangement for pressing organic material into a bale 256. The baler 250 can comprise a bale wrapper used as an arrangement for wrapping the organic material pressed into the bale 256 with a film for storage (e.g., weather protected). The baler is built on a frame 260 that is supported on the ground by wheels or other known ground-engaging mechanisms 262. The baler 250 includes a rear door 264 that opens to eject a bale 256.

The baler 250 can be towed in operation via a drawbar 264 behind the agricultural vehicle 252, such as a tractor or other work machine. In an alternative embodiment, the baler 250 may also be self-propelled. A bale 256 produced in the baler 250 is created by collecting the crop using a crop pick-up mechanism 254 (e.g., input or gatherer), where it is conditioned and sent into the winding mechanism using belts, chains, and/or rollers. The winding mechanism winds layers of the crop 270 into a round bale 256 in multiple layers at least until a desired size/shape/density is achieved. Typically, the formed bale 256 is moved into a wrapping position and wrapped to provide a desired containment. During the wrapping operation film is unwound from the film dispensers and wrapped around the bale, and film holders can press the film during the wrapping operations against the bale 256 and cut the film after wrapping. Subsequently, the bale 256 is ejected after lifting the back door 268.

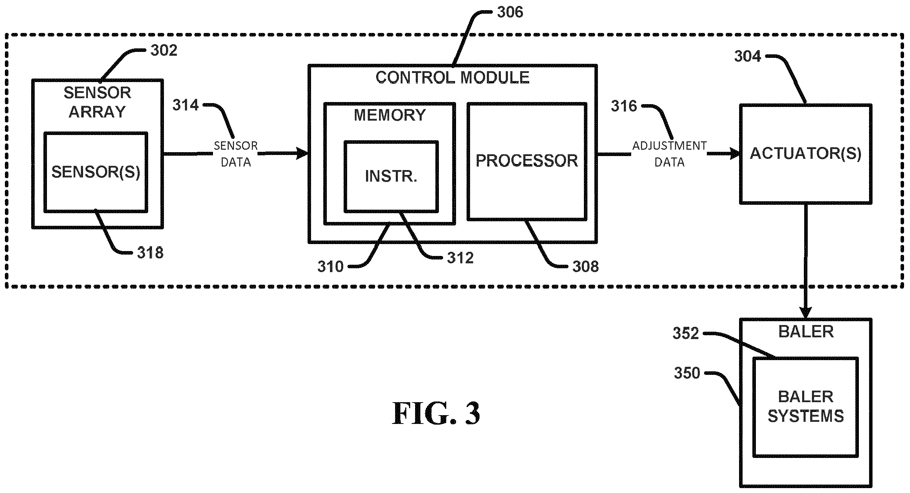

FIGURE 3 is a schematic diagram illustrating one example implementation of a system 300 for improving bale characteristics during a baling operation. In this implementation, the system 300 comprises a sensor array 302 that comprises one or more sensors 318, which collect sensor data 314 indicative of a condition of a condition of a bale (e.g., 156, 256 of FIGURE 1) in real-time. That is, for example, the sensor array 302 can detect the condition of a bale during forming and/or after it exits the baler (e.g., 150, 250 of FIGURES 1 and 2), during operation. In the example system 300, one or more actuators 304 can be used to adjust various baler forming characteristics in baler systems 352 of the baler 350, on the fly, based at least on received adjustment data 316.

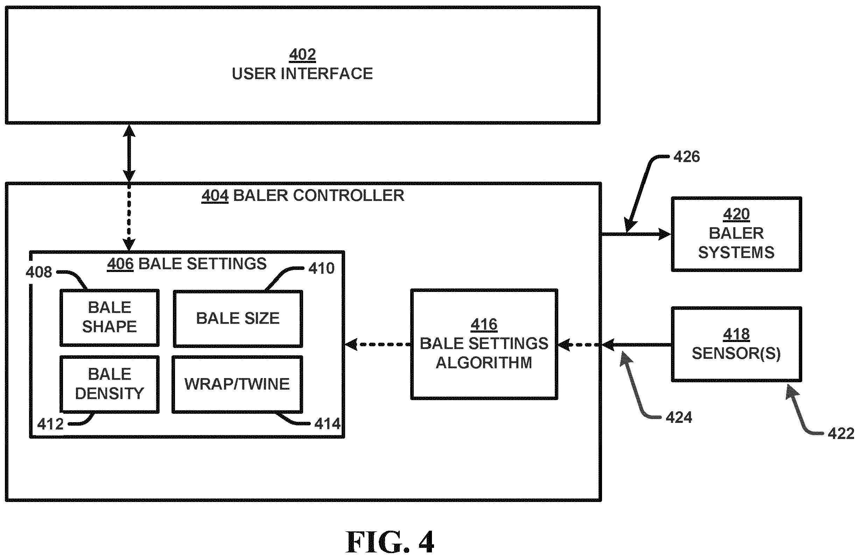

As an illustrative example, FIGURE 4 is an example schematic diagram of a system 400 for adjusting baler settings during operation of a baler implement coupled to a vehicle, such as a tractor (e.g., 152, 252 of FIGURES 1 and 2). In this example, with continued reference to FIGURES 1-3, the example system 400 comprises a baler controller 404 that is configured to control baler systems 420, using commands or adjustment data 426. In this example, the system 400 comprises a sensor array 422 that comprises one or more sensors 418, which collect sensor data 424 indicative of one or more characteristics of a formed bale (e.g., 156, 256 of FIGURES 1 and 2) in real-time, and provide that data 424 to a baler controller 404. That is, for example, the sensor array 422 can detect the condition of the formed bale while it is being formed, prior to ejection, and/or after ejection from the baler.

In the example system 400, the baler systems 420 in the baler are used to form the bale, as described above. Respective baler system 420 can comprise one or more actuators that can adjust the system settings, such as based on baler adjustment commands 426 provided by the baler controller 404. As an example, the baler controller 404 can provide command 426 in real-time, and the baler system actuators can make adjustments to the baler systems 420 on the fly. For example, if an undesired (e.g., out of spec) bale is formed, as detected by the sensor array 422, the sensor data 424 can be used by the baler controller 404 to generate baler adjustment commands 426 that update the baler systems 420 to form subsequent bales to the desired specification(s).

In the example system 400, the baler controller 404 is configured to receive the sensor data 424 and transmits the baler adjustment data 426. That is, for example the baler controller 404 receives the sensor data 424 from the sensor array 422, and transmits the adjustment commands 426 to the actuator(s) in the baler system 420. Further, as illustrated in FIGURE 3, the control module 306 (e.g., part of or a.k.a. the baler controller 404) comprises a computer processor 328, that is configured to process data and instructions, and provide resulting data based on the processed data and instructions. Additionally, the control module 306 comprises memory 330 (e.g., computer memory, such as a device or system that is used to store information for use in a computer or related computer hardware and digital electronic devices, including short and long-term memory, temporary and permanent memory, and the like). In this implementation, the memory 430 stores instructions, such as bale setting algorithm 416, bale setting 406, such as bale shape 408, bale size 410, bale density 412, and wrap/twine settings 414, that are configured to, when processed by the computer processor 328 in conjunction with the sensor data 424, generate the adjustment commands 426. The adjustment commands 426 are generated by determining an amount of bale setting 406 adjustment may be needed to result in a predetermined conditioning for the produced bales, where the determined amount of baler system setting adjustment is based at least upon the sensor data 424.

In some implementations, bale settings 406, and/or resulting baler adjustment commands 426, can be viewed and adjusted using a user interface 402 communicatively coupled with the baler controller 404. That is, an operator of the tractor (e.g., 152, 252) may have a display in the cab that comprises the user interface 402. In this example, the user can view current setting (e.g., bale setting 406), view information generated by the sensor data 426 (e.g., current or prior bale characteristics), and can adjust the bale setting 406 to adjust the characteristics of subsequent bales.

As an example, an operator may determine that a specified bale characteristic is desired for a target crop, such as based on the type of crop, the crop conditions, the field conditions, type of equipment, and/or the weather conditions (present and future), desired use of bale. For example, as described above, the operator can preset the pickup height for the baler, which is loaded to the bale settings 406. During operation, the sensors 418 may detect a low mass flow of the incoming crop and the bale settings algorithm can use the sensor data 424 to adjust the pickup height to meet desired bale setting 406 for bale density 412, bale shape 408, and/or bale size 410, based on ground speed and site conditions. In this example, the operator may enter site conditions into the user interface 402, and ground speed can be provided by a speed sensor.

As another example, regarding the bale size or flake width settings 410, the desired size of the bale (round or square) can be preset based on the desired result, type of crop, crop density, etc., and the flake size can be preset for square bales. These settings can be input by the operator using the user interface 402, and stored by the baler controller 404 in the bale settings 406, such as in memory 310. During operation, based on the sensor data 424, bales size may be varied depending on the desired bale consistency and weight - bale density 412. In this example, a predetermined weight for each bale may also mean that the bale size differs between bales that have different densities and/or different crop characteristics. As such, the bale size 410 can be met by adjusting bale density 412 and/or amount of pressure load applied to crop compression, during operation.

As another example, the bale shape 406 can be preset based on the desired certain shape of the round bale desired for the end use, and for more effective bale storage. Bale shape setting 408 can be preset, and sensor data 424 may indicate whether the formed shaped of the bale is within shape parameters. As an example, if the tractor/baler combination is misaligned with a target windrow of a crop, the incoming crop may form a misaligned bale shape. IN this example the sensors 418 may detect the misshapen bale, and/or may detect the misalignment with the windrow. As such, the sensor date 424 ca be used to realign the tractor, and/or realign the bale former in the baler, to create a desire shape.

Regarding the wrap or twine setting 414, for example, an appropriate amount of tension is desired for the ties or wraps in order to maintain a desired shape, and to mitigate breakage or tearing of the ties/wraps. The desired tension, pressure, or tie/wrap configuration can be preset by the operator. During operation, the sensor 418 may detect a fault in wrapping (e.g., tears, too loose, too tight), or in the twine ties (e.g., breakage, too loose, etc.). The bale setting algorithm can 416 can use the sensor data 424 to adjust the wrap/twine setting 414, resulting in an adjustment command to the baler system to adjust the tension, pressure, amount of wrap/twine, etc. of the wrap/tie mechanism.

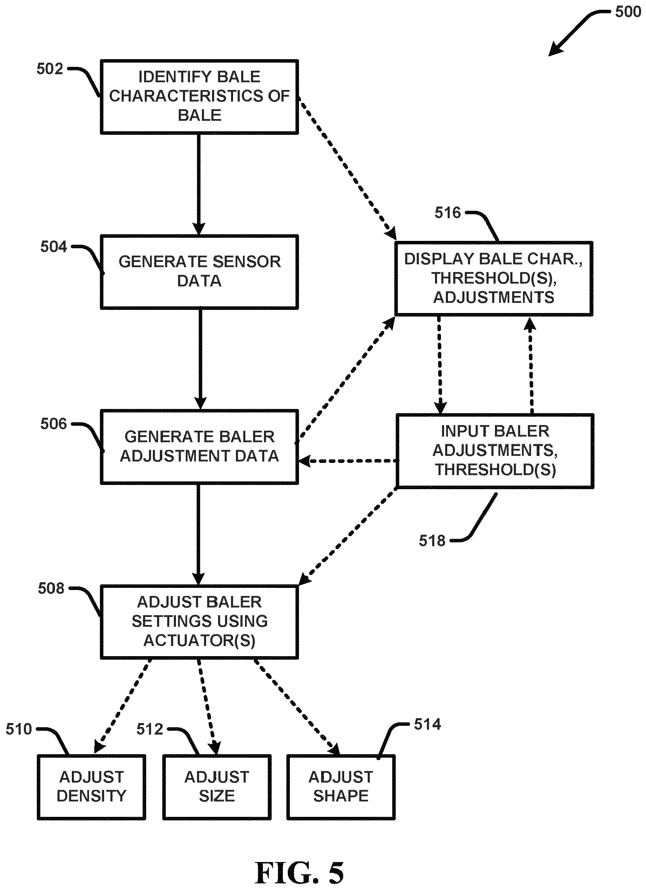

Figure 5 is a flow diagram illustrating and example implementation of a method for automatic adjustment of baler settings during operation of a baler that collects a target crop and forms a bale from the collected crop. At 502, bale characteristics of the formed bale are identified using one or more of a sensor array. At 504, sensor data indicative of the identified bale characteristics is generated. At 506, baler adjustment data indicative of one or more baler system adjustments is generated using a baler controller. Here, the baler adjustment data is generated based at least on the sensor data and a pre-determined threshold for one or more of the bale characteristics. At 508, baler settings in the baler are adjusted using one or more actuators based at least on the baler adjustment data.

Further, in some implementations, at 510, bale density can be adjusted. The baler settings that adjust a compression setting in the baler settings can be adjusted to meet the pre-determined threshold for the bale using baler adjustment data, where the baler characteristics comprise bale density. In some implementations, at 512, the bale size and/or flake size can be adjusted. The baler settings that adjust a flake width of the bale and/or a width of the bale can be adjusted to meet the pre-determined threshold for the bale using the baler adjustment data, where the baler characteristics comprise bale size and/or bale flake size. In some implementations, at 514, the bale shape can be adjusted. The baler settings that adjust a shape of the bale can be adjusted to meet the pre-determined threshold for the bale using baler adjustment data, where the baler characteristics comprise bale shape.

In some implementations, at 516, a user interface can be used to display identified bale characteristics, a pre-determined threshold for respective bale characteristics, and/or baler adjustment settings indicative of baler adjustment data. In some implementations, at 518, the user interface can be used to input user input that is indicative of baler adjustment settings and/or pre-determined threshold(s).

Additionally, in some implementations, data can be collected at regular intervals (e.g., or continually) and curated into a local or remote operations center, and loaded to a database with spatial and temporal indexing capabilities. As one example, the data may be analyzed as it is collected for various portions of the baler operation and system, and then, in combination with the location and time information, and the data records, determine adjustment settings (e.g., density, size, shape, wrap/twine setting, flow rate, etc.) for formed at a time given for bale characteristics. In this example, once a bale characteristic is identified as out of the threshold (e.g., pre-determined spec) the adjustment settings can be determined on the fly. As an example, this collection and curation of the data can be done automatically based on the sensor signals, speed, location, and time match without need for operator intervention. Further, if the target or pre-determined threshold is being met, adjustments may not be needed, and the baler settings can remain the same for a subsequent bale.

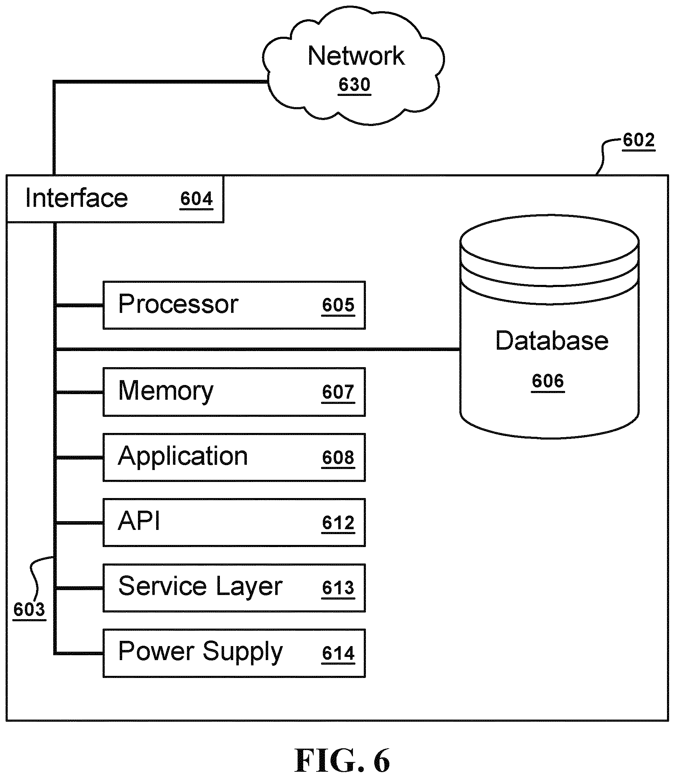

FIGURE 6 is a schematic diagram of an example computer system 600 used to provide computational functionalities associated with described algorithms, methods, functions, processes, flows, and procedures described in the present disclosure, according to some implementations of the present disclosure. The illustrated computer 602 is intended to encompass any computing device such as a server, a desktop computer, a laptop/notebook computer, a wireless data port, a smart phone, a personal data assistant (PDA), a tablet computing device, or one or more processors within these devices, including physical instances, virtual instances, or both. The computer 602 can include input devices such as keypads, keyboards, and touch screens that can accept user information. Also, the computer 602 can include output devices that can convey information associated with the operation of the computer 602. The information can include digital data, visual data, audio information, or a combination of information. The information can be presented in a graphical user interface (UI) (or GUI).

The computer 602 can serve in a role as a client, a network component, a server, a database, a persistency, or components of a computer system for performing the subject matter described in the present disclosure. The illustrated computer 602 is communicably coupled with a network 630. In some implementations, one or more components of the computer 602 can be configured to operate within different environments, including cloud-computing-based environments, local environments, global environments, and combinations of environments.

At a high level, the computer 602 is an electronic computing device operable to receive, transmit, process, store, and manage data and information associated with the described subject matter. According to some implementations, the computer 602 can also include, or be communicably coupled with, an application server, an email server, a web server, a caching server, a streaming data server, or a combination of servers.

The computer 602 can receive requests over network 630 from a client application (for example, executing on another computer 602). The computer 602 can respond to the received requests by processing the received requests using software applications. Requests can also be sent to the computer 602 from internal users (for example, from a command console), external (or third) parties, automated applications, entities, individuals, systems, and computers.

Each of the components of the computer 602 can communicate using a system bus 603. In some implementations, any or all of the components of the computer 602, including hardware or software components, can interface with each other or the interface 604 (or a combination of both), over the system bus 603. Interfaces can use an application programming interface (API) 612, a service layer 613, or a combination of the API 612 and service layer 613. The API 612 can include specifications for routines, data structures, and object classes. The API 612 can be either computer-language independent or dependent. The API 612 can refer to a complete interface, a single function, or a set of APIs.

The service layer 613 can provide software services to the computer 602 and other components (whether illustrated or not) that are communicably coupled to the computer 602. The functionality of the computer 602 can be accessible for all service consumers using this service layer. Software services, such as those provided by the service layer 613, can provide reusable, defined functionalities through a defined interface. For example, the interface can be software written in JAVA, C++, or a language providing data in extensible markup language (XML) format. While illustrated as an integrated component of the computer 602, in alternative implementations, the API 612 or the service layer 613 can be stand-alone components in relation to other components of the computer 602 and other components communicably coupled to the computer 602. Moreover, any or all parts of the API 612 or the service layer 613 can be implemented as child or sub-modules of another software module, enterprise application, or hardware module without departing from the scope of the present disclosure.

The computer 602 includes an interface 604. Although illustrated as a single interface 604 in FIGURE 6, two or more interfaces 604 can be used according to particular needs, desires, or particular implementations of the computer 602 and the described functionality. The interface 604 can be used by the computer 602 for communicating with other systems that are connected to the network 630 (whether illustrated or not) in a distributed environment. Generally, the interface 604 can include, or be implemented using, logic encoded in software or hardware (or a combination of software and hardware) operable to communicate with the network 630. More specifically, the interface 604 can include software supporting one or more communication protocols associated with communications. As such, the network 630 or the interface's hardware can be operable to communicate physical signals within and outside of the illustrated computer 602.

The computer 602 includes a processor 606. Although illustrated as a single processor 606 in FIGURE 6, two or more processors 606 can be used according to particular needs, desires, or particular implementations of the computer 602 and the described functionality. Generally, the processor 606 can execute instructions and can manipulate data to perform the operations of the computer 602, including operations using algorithms, methods, functions, processes, flows, and procedures as described in the present disclosure.

The computer 602 also includes a database 606 that can hold data for the computer 602 and other components connected to the network 630 (whether illustrated or not). For example, database 606 can be an in-memory, conventional, or a database storing data consistent with the present disclosure. In some implementations, database 606 can be a combination of two or more different database types (for example, hybrid in-memory and conventional databases) according to particular needs, desires, or particular implementations of the computer 602 and the described functionality. Although illustrated as a single database 606 in FIGURE 6, two or more databases (of the same, different, or combination of types) can be used according to particular needs, desires, or particular implementations of the computer 602 and the described functionality. While database 606 is illustrated as an internal component of the computer 602, in alternative implementations, database 606 can be external to the computer 602.

The computer 602 also includes a memory 607 that can hold data for the computer 602 or a combination of components connected to the network 630 (whether illustrated or not). Memory 607 can store any data consistent with the present disclosure. In some implementations, memory 607 can be a combination of two or more different types of memory (for example, a combination of semiconductor and magnetic storage) according to particular needs, desires, or particular implementations of the computer 602 and the described functionality. Although illustrated as a single memory 607 in FIGURE 6, two or more memories 607 (of the same, different, or combination of types) can be used according to particular needs, desires, or particular implementations of the computer 602 and the described functionality. While memory 607 is illustrated as an internal component of the computer 602, in alternative implementations, memory 607 can be external to the computer 602.

The application 608 can be an algorithmic software engine providing functionality according to particular needs, desires, or particular implementations of the computer 602 and the described functionality. For example, application 608 can serve as one or more components, modules, or applications. Further, although illustrated as a single application 608, the application 608 can be implemented as multiple applications 608 on the computer 602. In addition, although illustrated as internal to the computer 602, in alternative implementations, the application 608 can be external to the computer 602.

The computer 602 can also include a power supply 614. The power supply 614 can include a rechargeable or non-rechargeable battery that can be configured to be either user- or non-user-replaceable. In some implementations, the power supply 614 can include power-conversion and management circuits, including recharging, standby, and power management functionalities. In some implementations, the power-supply 614 can include a power plug to allow the computer 602 to be plugged into a wall socket or a power source to, for example, power the computer 602 or recharge a rechargeable battery.

There can be any number of computers 602 associated with, or external to, a computer system containing computer 602, with each computer 602 communicating over network 630. Further, the terms "client," "user," and other appropriate terminology can be used interchangeably, as appropriate, without departing from the scope of the present disclosure. Moreover, the present disclosure contemplates that many users can use one computer 602 and one user can use multiple computers 602.

Described implementations of the subject matter can include one or more features, alone or in combination.

The word "exemplary" is used herein to mean serving as an example, instance or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, at least one of A and B and/or the like generally means A or B or both A and B. In addition, the articles "a" and "an" as used in this application and the appended claims may generally be construed to mean "one or more" unless specified otherwise or clear from context to be directed to a singular form.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (*e.g*., that is functionally equivalent), even though not structurally equivalent to the disclosed structure which performs the function in the herein illustrated exemplary implementations of the disclosure. In addition, while a particular feature of the disclosure may have been disclosed with respect to only one of several implementations, such feature may be combined with one or more other features of the other implementations as may be desired and advantageous for any given or particular application. Furthermore, to the extent that the terms "includes," "having," "has," "with," or variants thereof are used in either the detailed description or the claims, such terms are intended to be inclusive in a manner similar to the term "comprising."

The implementations have been described, hereinabove. It will be apparent to those skilled in the art that the above methods and apparatuses may incorporate changes and modifications without departing from the general scope of this invention. It is intended to include all such modifications and alterations in so far as they come within the scope of the appended claims or the equivalents thereof.

## Claims

1. A system (100) for adjusting baler system settings during operation, comprising:
a baler (150) that collects a target crop and forms a bale (156) from the collected crop;
a sensor array (302) comprising one or more sensors (318), the one or more sensors identifying bale characteristics of the formed bale, the sensor array generating sensor data (314) indicative of the identified bale characteristics;
a baler controller (404) generating baler adjustment data (426) indicative of one or more baler system adjustments, the baler adjustment data generated based at least on the sensor data and a pre-determined threshold for one or more of the bale characteristics; and
one or more actuators (304) that adjust baler settings in the baler based at least on the baler adjustment data.

2. The system of claim 1, comprising a user interface (402) configured to receive user input indicative of baler adjustment settings; display identified bale characteristics; display a pre-determined threshold for respective bale characteristics; and/or display baler adjustment settings indicative of baler adjustment data.

3. The system according to at least one of the preceding claims, the baler adjustment data automatically generated by the baler controller based on the sensor data and the pre-determined threshold, and the baler adjustment data automatically provided to the one or more actuators to adjust the baler settings in real-time.

4. The system according to at least one of the preceding claims, the baler characteristics comprising baler pick-up height, and the baler adjustment data indicative of a height adjustment of the baler pick-up used to meet the pre-determined threshold for the bale.

5. The system according to at least one of the preceding claims, the baler characteristics comprising bale size (410) and/or bale flake size, and the baler adjustment data indicative of an adjustment to the baler settings that adjust a flake width of the bale and/or a width of the bale to meet the pre-determined threshold for the bale.

6. The system according to at least one of the preceding claims, the baler characteristics comprising bale shape (408), and the baler adjustment data indicative of an adjustment to the baler settings that adjust a shape of the bale to meet the pre-determined threshold for the bale, and/or a path of the baler to adjust the shape of the bale to meet the pre-determined threshold for the bale.

7. The system according to at least one of the preceding claims, the baler characteristics comprising bale density (412), and the baler adjustment data indicative of an adjustment to a compression setting in the baler settings to meet the pre-determined threshold for the bale.

8. The system according to at least one of the preceding claims, the baler characteristics comprising a bale wrap characteristic or twine control characteristic (414), and the adjustment data indicative of an adjustment to an amount of wrap and/or wrap pressure setting, or an adjustment to twine control setting in the baler settings to meet the pre-determined threshold for the bale.

9. The system according to at least one of the preceding claims, the one or more sensors in the sensor array comprising one or more of: a mass flow sensor, a moisture sensor, load sensor, and direction sensor, and the sensor data used to determine one or more of: bale or flake size, bale density, bale shape; and/or an image sensor to image the as it is formed and/or after it is formed to identify the bale characteristics.

10. A method of adjusting baler system settings during operation of a baler that collects a target crop and forms a bale from the collected crop, the method comprising:
identifying bale characteristics of the formed bale using one or more of a sensor array, and generating sensor data indicative of the identified bale characteristics;
generating baler adjustment data indicative of one or more baler system adjustments using a baler controller, where the baler adjustment data is generated based at least on the sensor data and a pre-determined threshold for one or more of the bale characteristics; and
adjusting baler settings in the baler using one or more actuators based at least on the baler adjustment data.

11. The method of claim 10, comprising displaying, on a user interface, identified bale characteristics, a pre-determined threshold for respective bale characteristics, and/or baler adjustment settings indicative of baler adjustment data, and/or inputting, on a user interface, user input indicative of baler adjustment settings and/or pre-determined threshold(s).

12. The method of claims 10 and 11, comprising automatically generating the baler adjustment data using the baler controller based on the sensor data and the pre-determined threshold, and automatically providing baler adjustment data to the one or more actuators to adjust the baler settings in real-time.

13. The method according to at least one of the claims 10 to 12, comprising adjusting the baler settings that adjust a flake width of the bale and/or a width of the bale to meet the pre-determined threshold for the bale using the baler adjustment data, where the baler characteristics comprise bale size and/or bale flake size.

14. The method according to at least one of the claims 10 to13, comprising adjusting the baler settings that adjust a shape of the bale to meet the pre-determined threshold for the bale using baler adjustment data, where the baler characteristics comprise bale shape.

15. The method according to at least one of the claims 10 to 14, comprising adjusting the baler settings that adjust a compression setting in the baler settings to meet the pre-determined threshold for the bale using baler adjustment data, where the baler characteristics comprise bale density.
